# EUROPEAN PATENT APPLICATION

(11) **EP 4 778 401 A1**
(43) Date of publication of application: **22.07.2026**
(21) Application number: 25198888.7
(22) Date of filing: 29.08.2025
(51) Int. Cl.: A23G 9/04, A23G 9/12, A23G 9/22, A23G 9/28, B01F 27/724

(54) **FEED AND DISCHARGE CARTRIDGE AND COLD BEVERAGE MAKER**

(30) Priority: 16.01.2025 CN 202510073776
(71) Applicant: Guangdong Welly Electrical Appliances Co., Ltd., Zhongshan Guangdong 528400 (CN)
(72) Inventor: WU, Xiangan, Zhongshan (CN); MAI, Linjun, Zhongshan (CN); LIAO, Qiubo, Zhongshan (CN); HU, Wenzhan, Zhongshan (CN); MA, Yangyang, Zhongshan (CN)
(74) Representative: Sun, Yiming

(57) **Abstract**

The present disclosure provides a feed and discharge cartridge and a cold beverage maker, where the feed and discharge cartridge includes a cartridge body and a discharge assembly provided on the cartridge body; the cartridge body further includes a guide portion; the guide portion is provided at an end of the cartridge body close to the discharge assembly; the guide portion inclines gradually from an upper portion of the cartridge body to the discharge assembly; an inner wall of the guide portion forms a concave surface; and the inner wall of the guide portion is a concave continuous surface. The present disclosure can facilitate backflow of the formed cold beverage, and can be applicable to smoothie products and ice cream products.

## Description

### TECHNICAL FIELD

The present disclosure relates to the technical field of cold beverage makers, and in particular to a feed and discharge cartridge and a cold beverage maker.

### BACKGROUND

As a common cold beverage processing device, the smoothie maker has been widely applied to cold beverage shops, restaurants, home kitchens, etc. The existing smoothie makers are generally limited to producing smoothies, a type of cold beverage characterized by large ice crystals and a coarse texture. These smoothie makers typically utilize a cartridge to contain and store raw materials and the resulting mixture. After raw materials are poured into the cartridge, a refrigeration assembly freezes the mixture while a stirring assembly stirs it during freezing, forming smoothies with larger ice crystals. In the stirring process, the smoothie moves continuously in the cartridge. The smoothie at a front end of the cartridge is extruded, and flows back to a rear end of the cartridge under a pressure. However, the existing smoothie maker cannot make ice cream products with smaller ice crystals and a delicate mouthfeel. Because of no guide structure provided correspondingly at the front end of the cartridge, the ice cream products with the smaller ice crystals flow back hardly at the front end of the cartridge to cause blockage, thereby affecting the subsequent stirring.

### SUMMARY

A technical problem to be solved by the present disclosure is to provide a feed and discharge cartridge. The present disclosure can facilitate backflow of the formed cold beverage, and can be applicable to smoothie products and ice cream products.

In order to solve the above technical problem, the present disclosure provides a feed and discharge cartridge, including a cartridge body and a discharge assembly provided on the cartridge body, where a feed portion and a storage chamber are provided on the cartridge body; the feed portion communicates with the storage chamber; a discharge port is formed in a sidewall of the storage chamber; and the discharge assembly can communicate with the storage chamber through the discharge port; and
the cartridge body further includes a guide portion; the guide portion is provided at an end of the cartridge body close to the discharge assembly; the guide portion inclines gradually from an upper portion of the cartridge body to the discharge assembly; and an inner wall of the guide portion forms a concave surface.

As an improvement to the above solution, the inner wall of the guide portion is a concave continuous surface.

As an improvement to the above solution, the feed portion is provided at an end of the cartridge body away from the discharge assembly and located on the upper portion of the cartridge body; the feed portion includes a feed port; and a cross section of the feed port is gradually reduced from top to bottom.

As an improvement to the above solution, a transitional connection portion is provided between an outer wall of the cartridge body and the feed portion; and the transitional connection portion extends gradually from the outer wall of the cartridge body to the feed portion.

As an improvement to the above solution, the transitional connection portion is an arc transition or an oblique transition or has a smooth surface.

As an improvement to the above solution, a width of the transitional connection portion is gradually increased from the outer wall of the cartridge body to the feed portion.

As an improvement to the above solution, at least a part of an outer contour for a cross section of the cartridge body is elliptical or approximately elliptical.

As an improvement to the above solution, the end of the cartridge body close to the discharge assembly is provided with a side end surface; the discharge assembly is provided on the side end surface; the discharge port is formed in the side end surface; an upper portion of the side end surface is connected to a lower portion of the guide portion; and a connecting line for the side end surface and the guide portion is a first connecting line.

As an improvement to the above solution, a sidewall of the cartridge body is provided with a cartridge body surface; the cartridge body surface is connected to an upper portion of the guide portion; a connecting line for the cartridge body surface and the guide portion is a second connecting line; and there are two second connecting lines that incline symmetrically from a top of the cartridge body to two sides of the guide portion.

As an improvement to the above solution, ends of the two second connecting lines intersect with each other, and the other ends of the two second connecting lines respectively extend to the two sides of the guide portion, and are respectively connected to two ends of the first connecting line.

As an improvement to the above solution, the feed portion further includes a guide plate; the guide plate is located under the feed port; and the guide plate includes one side connected to an inner wall of the feed port, and the other side obliquely extending to the storage chamber.

As an improvement to the above solution, a stirring member is provided in the storage chamber; an end of the stirring member close to the discharge assembly is provided with an extruding end; and a minimum distance between the extruding end and the side end surface ranges from 3 mm to 10 mm.

As an improvement to the above solution, a maximum distance between an outer edge of a spiral portion of the stirring member and an inner wall of the upper portion of the cartridge body ranges from 2 mm to 38 mm.

As an improvement to the above solution, a maximum distance between an outer edge of a spiral portion of the stirring member and an inner wall of a lower portion of the cartridge body ranges from 1.5 mm to 4 mm.

A maximum distance between an outer edge of a spiral portion of the stirring member and an inner wall of each of a left side and a right side of the cartridge body ranges from 1.5 mm to 6 mm.

As an improvement to the above solution, the transitional connection portion protrudes upward from a surface of the cartridge body; the feed portion is provided on the transitional connection portion; a feed chamber is provided in the transitional connection portion; the feed chamber communicates with the storage chamber; and a size of a longitudinal section of the feed chamber is greater than a size of a longitudinal section of the storage chamber.

As an improvement to the above solution, the discharge assembly includes a discharge hopper, a handle, and a discharge valve; the discharge hopper is provided on the side end surface; the discharge port can communicate with the discharge hopper; one end of the handle includes one side hinged to the discharge hopper, and the other side hinged to the discharge valve; and the handle can drive the discharge valve to rise or fall, thereby opening or closing the discharge hopper.

The present disclosure further provides a cold beverage maker, including the above feed and discharge cartridge.

The present disclosure has the following beneficial effects:
The feed and discharge cartridge provided by the present disclosure includes the cartridge body and the discharge assembly provided on the cartridge body. The feed portion and the storage chamber are provided on the cartridge body. The material such as the beverage and the milk enters the storage chamber from the feed portion, and then is frozen and stirred. In the stirring process, the cartridge body further includes the guide portion. The guide portion is provided at the end of the cartridge body close to the discharge assembly. The guide portion inclines gradually from the upper portion of the cartridge body to the discharge assembly. The inner wall of the guide portion forms the concave surface. The smoothie or ice cream formed in the stirring process moves to the end of the cartridge body close to the discharge assembly. Then, the smoothie or ice cream is guided by the inclined guide portion, such that it can flow back to a middle of the cartridge body. Moreover, because of the concave surface, the ice cream with smaller ice crystals flows better on the inner wall of the guide portion. Therefore, the present disclosure can make both the smoothie and the ice cream flow back smoothly, and can be applicable to smoothie products and ice cream products.

### BRIEF DESCRIPTION OF THE DRAWINGS

FIG. 1 is a schematic sectional view of a feed and discharge cartridge according to the present disclosure;
FIG. 2 is a schematic structural view of a cartridge body according to the present disclosure;
FIG. 3 is a partially enlarged view of A shown in FIG. 1;
FIG. 4 is a partially sectional view of a cartridge body and a stirring member according to the present disclosure; and
FIG. 5 is a schematic view illustrating a distance between a cartridge body and a stirring member according to the present disclosure.

### DETAILED DESCRIPTION

In order to make the objectives, technical solutions, and advantages of the present disclosure more clear, the present disclosure will be further described in detail below with reference to the accompanying drawings. It should be noted that orientation terms such as "upper", "lower", "left", "right", "front", "rear", "inner", and "outer" that appear or are about to appear in the present disclosure are only based on the accompanying drawings of the present disclosure, and do not specifically limit the present disclosure.

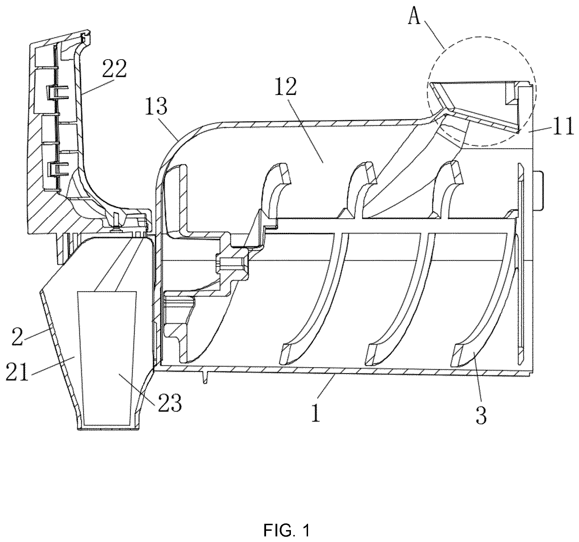

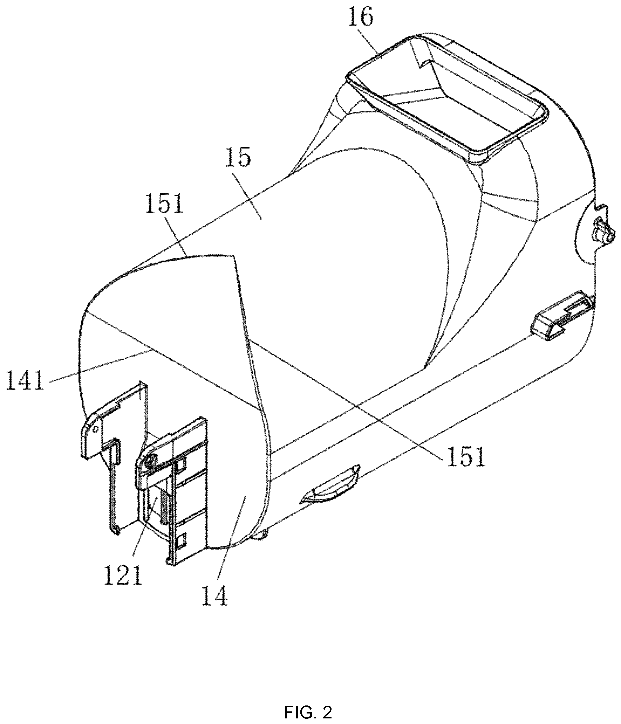

Referring to FIG. 1 and FIG. 2, an embodiment of the present disclosure provides a feed and discharge cartridge, including a cartridge body 1 and a discharge assembly 2 provided on the cartridge body 1. The cartridge body 1 is configured to store a material and provide a space for freezing and stirring of the material. A formed product such as smoothie and ice cream can be stored in the cartridge body 1. Under an action of a stirring assembly, the product not discharged is circulated in the cartridge body 1. A feed portion 11 and a storage chamber 12 are provided on the cartridge body 1. The feed portion 11 communicates with the storage chamber 12. Liquid such as the beverage and the milk can enter the storage chamber 12 from the feed portion 11, and can be frozen and stirred in the storage chamber 12. A discharge port 121 is formed in a sidewall of the storage chamber 12. The discharge assembly 2 can communicate with the storage chamber 12 through the discharge port 121. The formed product such as the smoothie and the ice cream can be discharged from the discharge assembly 2 through the discharge port 121. The discharge assembly 2 is configured to control a discharge channel to open and close. In order to make the formed product flow at a front end of the cartridge body 1 conveniently, the cartridge body 1 further includes a guide portion 13. The guide portion 13 is provided at an end of the cartridge body 1 close to the discharge assembly 2, namely the front end of the cartridge body 1. The guide portion 13 inclines gradually from an upper portion of the cartridge body 1 to the discharge assembly 2. Under an action of the inclined guide portion 13, the formed product can flow from a side of the discharge assembly 2 to the upper portion of the cartridge body 1, without affecting the product flowing from a middle of the cartridge body 1 to the discharge assembly 2. Under a continuous extruding force, the product on the guide portion 13 can flow continuously back to the middle from the upper portion of the cartridge body 1, thereby forming circulation. Considering that the ice cream with smaller particles remains in small corners easily, an inner wall of the guide portion 13 forms a concave surface. The combination of the concave surface and the cartridge body 1 is less likely to generate a dirty angle than the combination of the plane and the cartridge body 1, and is more favorable for the ice cream with the smaller ice crystals to flow smoothly. Therefore, the feed and discharge cartridge provided by the present disclosure can be applicable to smoothie products and ice cream products.

The embodiment of the present disclosure has the following beneficial effects:
The feed and discharge cartridge provided by the embodiment of the present disclosure includes the cartridge body 1 and the discharge assembly 2 provided on the cartridge body 1. The feed portion 11 and the storage chamber 12 are provided on the cartridge body 1. The material such as the beverage and the milk enters the storage chamber 12 from the feed portion 11, and then is frozen and stirred. In the stirring process, the cartridge body 1 further includes the guide portion 13. The guide portion 13 is provided at the end of the cartridge body 1 close to the discharge assembly 2. The guide portion 13 inclines gradually from the upper portion of the cartridge body 1 to the discharge assembly 2. The inner wall of the guide portion 13 forms the concave surface. The smoothie or ice cream formed in the stirring process moves to the end of the cartridge body 1 close to the discharge assembly 2. Then, the smoothie or ice cream is guided by the inclined guide portion 13, such that it can flow back to the middle of the cartridge body 1. Moreover, because of the concave surface, the ice cream with smaller ice crystals flows better on the inner wall of the guide portion 13. Therefore, the present disclosure can make both the smoothie and the ice cream flow back smoothly, and can be applicable to smoothie products and ice cream products.

Specifically, the inner wall of the guide portion 13 is a concave continuous surface. With the concave continuous surface, the smoothie and the ice cream can flow back smoothly to the upper portion of the cartridge body 1 from the discharge assembly 2. The concave continuous surface facilitates backflow of the solid-liquid mixture, thereby forming circulation of the solid-liquid mixture in the cartridge body 1.

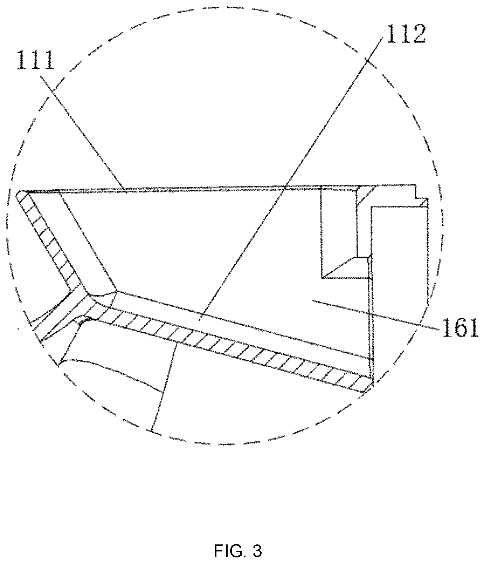

Referring to FIG. 1 and FIG. 3, the feed portion 11 is provided at an end of the cartridge body 1 away from the discharge assembly 2 and located on the upper portion of the cartridge body 1, such that the material can be fully frozen and stirred. The feed portion 11 includes a feed port 111. A cross section of the feed port 111 is gradually reduced from top to bottom. The large feed port 111 is convenient to pour the material, while the necked feed port 111 is convenient to gather the material.

A transitional connection portion 16 is provided between an outer wall of the cartridge body 1 and the feed portion 11. The transitional connection portion 16 is configured to form transitional connection between the feed port 111 and the cartridge body 1. The transitional connection portion 16 extends gradually from an outer wall of the cartridge body 1 to the feed portion 11. After the material is frozen into the solid-liquid mixture, the solid-liquid mixture can be accommodated in the transitional connection portion 16, and gradually pushed from the transitional connection portion 16 to the discharge port 121 by stirring. The transitional connection portion 16 increases the accommodation volume, and can further facilitate backflow of the solid-liquid mixture from the upper portion of the cartridge body 1.

In some embodiments, the transitional connection portion 16 is an arc transition or an oblique transition. With the arc transition or the oblique transition, the solid-liquid mixture can move from the feed port 111 to the middle of the cartridge body 1 smoothly and gradually, and move gradually close to the discharge port 121. Further, a surface of the transitional connection portion 16 may be a smooth surface. With the smooth surface, a force of friction of the solid-liquid mixture in the transitional connection portion 16 can be reduced. This facilitates movement of the solid-liquid mixture at the transitional connection portion 16 to stir and push the material conveniently, and further reduces the stacking, retention and the like of the solid-liquid mixture at the transitional connection portion 16.

In some embodiments, a width of the transitional connection portion 16 is gradually increased from the outer wall of the cartridge body 1 to the feed portion 11. In a direction away from the feed portion 11, the transitional connection portion 16 forms a gradually necked channel, so as to move the solid-liquid mixture to the middle of the cartridge body 1 together.

In the embodiment of the present disclosure, an outer contour for a cross section of the cartridge body 1 is a closed contour composed of a regular smooth curve or an irregular smooth curve. With the closed contour composed of the smooth curve, the force of friction of the solid-liquid mixture on the inner wall of the cartridge body 1 can be reduced, thereby reducing the stacking, retention and the like, facilitating uniform stirring, and improving stirring efficiency. Preferably, at least a part of the outer contour for the cross section of the cartridge body 1is circular or elliptical or approximately elliptical. The approximately elliptical shape refers to a closed curve profile with a major axis and a minor axis, but is different from a standard ellipse in edge curvature, symmetry and the like.

Referring to FIG. 2, the end of the cartridge body 1 close to the discharge assembly 2 is provided with a side end surface 14. The discharge assembly 2 is provided on the side end surface 14. The discharge port 121 is formed in the side end surface 14. The extruded solid-liquid mixture is gathered to the side end surface 14. An upper portion of the side end surface 14 is connected to a lower portion of the guide portion 13. In the embodiment, the upper portion of the side end surface 14 is tangentially connected to the lower portion of the guide portion 13. Along a junction between the guide portion 13 and the side end surface 14, the solid-liquid mixture can move smoothly from the side end surface 14 to the upper portion of the cartridge body 1. A connecting line for the side end surface 14 and the guide portion 13 is a first connecting line 141. The solid-liquid mixture is diverted for a first time at the tangential connecting line 141, such that the solid-liquid mixture can move from the side end surface 14 to the upper portion of the cartridge body 1.

A sidewall of the cartridge body 1 is provided with a cartridge body surface 15. The cartridge body surface 15 serves as a main sidewall of the cartridge body 1. The cartridge body surface 15 is connected to an upper portion of the guide portion 13. In the embodiment, the cartridge body surface 15 is tangentially connected to the upper portion of the guide portion 13. The solid-liquid mixture flows along the guide portion 13, and moves smoothly from the upper portion of the guide portion 13 to a connected position of the cartridge body surface 15. A connecting line for the cartridge body surface 15 and the guide portion 13 is a second connecting line 151. The solid-liquid mixture is diverted for a second time at the second connecting line 151, such that the solid-liquid mixture can flow back to the middle of the cartridge body 1, thereby forming circulation.

Referring to FIG. 2, in the embodiment of the present disclosure, there are two second connecting lines 151 that incline symmetrically from a top of the cartridge body 1 to two sides of the guide portion 13. With the two second connecting lines 151, the solid-liquid mixture can be guided from the two symmetrical sides of the guide portion 13. Meanwhile, with the inclined second connecting lines, a retention space of the solid-liquid mixture with the smaller ice crystals such as the ice cream at the guide portion 13 can be reduced, and the solid-liquid mixture flows back more smoothly.

Ends of the two second connecting lines 151 intersect with each other, and the other ends of the two second connecting lines respectively extend to the two sides of the guide portion 13, and are respectively connected to two ends of the first connecting line 141. Along a backflow direction of the solid-liquid mixture, the two second connecting lines 151 converge to the upper portion of the cartridge body 1 from the two ends of the first connecting line 141 and intersect. The solid-liquid mixture moving in the guide portion 13 can be gathered to a center of the upper portion of the cartridge body 1 to form a more centralized backflow route. In this way, the solid-liquid mixture flowed back has a small section overall. In case of a fixed flow rate, the flow velocity of the solid-liquid mixture in the backflow is improved, the backflow can be accelerated, and the solid-liquid mixture in a stirring state can move to the side end surface 14 smoothly, thereby ensuring backflow efficiency and stirring efficiency.

Further, referring to FIG. 3, in order to guide the material to the storage chamber 12, the feed portion 11 further includes a guide plate 112. The guide plate 112 is located under the feed port 111. The guide plate 112 includes one side connected to an inner wall of the feed port 111, and the other side obliquely extending to the storage chamber 12. When the material is poured, the inclined guide plate 112 can guide the material to one end of the storage chamber 12 quickly. One side of the guide plate 112 obliquely extends to a direction away from the discharge assembly 2, so as to keep a furthest distance between the material and the discharge assembly 2 to achieve an enough freezing space and an enough stirring space.

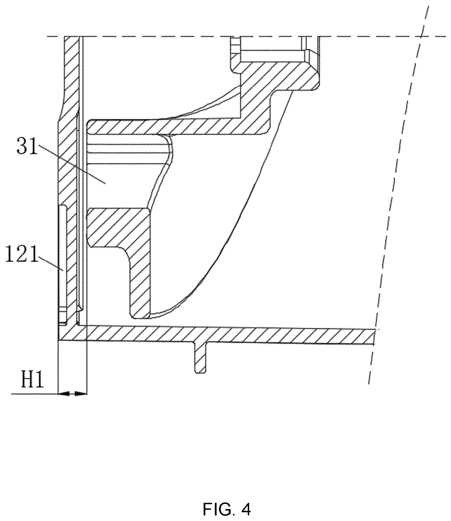

Referring to FIG. 1 and FIG. 4, a stirring member 3 is provided in the storage chamber 12. The stirring member 3 is spiral, can be configured to stir the solid-liquid mixture by means of rotation, and serves as a direct driving component for movement of the solid-liquid mixture. An end of the stirring member 3 close to the discharge assembly 2 is provided with an extruding end 31. The extruding end 31 of the stirring member 3 is nearest to the discharge assembly 2. At the extruding end 31, the stirring member 3 is separated from the solid-liquid mixture. By this time, a driving force for driving the solid-liquid mixture is converted into an extruding force through which the subsequent solid-liquid mixture moves forward. A minimum distance H1 between the extruding end 31 and the side end surface 14 ranges from 3 mm to 10 mm. Exemplarily, the minimum distance H1 between the extruding end 31 and the side end surface 14 is 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm or 10 mm, but is not limited thereto. When the minimum distance between the extruding end 31 and the side end surface 14 is less than 3 mm, the solid-liquid mixture flows back hardly for the insufficient distance between the extruding end 31 and the side end surface 14 to affect a backflow effect. When the minimum distance between the extruding end 31 and the side end surface 14 is greater than 10 mm, the solid-liquid mixture flows back slowly for the excessively large distance between the extruding end 31 and the side end surface 14, and the volume of the cartridge body 1 is further increased.

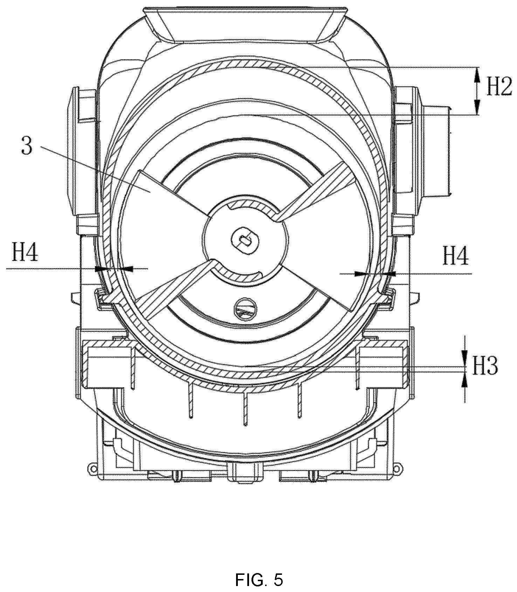

Referring to FIG. 5, a spiral portion of the stirring member 3 serves as a component for stirring the solid-liquid mixture, and is spiral overall. It can be configured to stir and push the solid-liquid mixture by means of rotation. In some embodiments, a maximum distance H2 between an outer edge of the spiral portion of the stirring member 3 and an inner wall of the upper portion of the cartridge body 1 ranges from 2 mm to 38 mm. Specifically, the maximum distance H2 between the outer edge of the spiral portion of the stirring member 3 and the inner wall of the upper portion of the cartridge body 1 is 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, 12.5 mm, 13 mm, 13.5 mm, 14 mm, 14.5 mm, 15 mm, 15.5 mm, 16 mm, 16.5 mm, 17 mm, 17.5 mm, 18 mm, 18.5 mm, 19 mm, 19.5 mm, 20 mm, 20.5 mm, 21 mm, 21.5 mm, 22 mm, 22.5 mm, 23 mm, 23.5 mm, 24 mm, 24.5 mm, 25 mm, 25.5 mm, 26 mm, 26.5 mm, 27 mm, 27.5 mm, 28 mm, 28.5 mm, 29 mm, 29.5 mm, 30 mm, 30.5 mm, 31 mm, 31.5 mm, 32 mm, 32.5 mm, 33 mm, 33.5 mm, 34 mm, 34.5 mm, 35 mm, 35.5 mm, 36 mm, 36.5 mm, 37 mm, or 37.5mm, but is not limited thereto. When the maximum distance between the outer edge of the spiral portion of the stirring member 3 and the inner wall of the upper portion of the cartridge body 1 is less than 2 mm, the volume is relatively small. A certain distance is required between the outer edge of the spiral portion of the stirring member 3 and the inner wall of the upper portion of the cartridge body 1 to reserve a largest possible accommodation space, and reserve a space for the backflow of the solid-liquid mixture. When the maximum distance between the outer edge of the spiral portion of the stirring member 3 and the inner wall of the upper portion of the cartridge body 1 is greater than 38 mm, the volume is excessively large, and the solid-liquid mixture cannot be stirred by the stirring member 3 completely to cause stacking, retention and the like.

**In** some embodiments, a maximum distance H3 between an outer edge of the spiral portion of the stirring member 3 and an inner wall of a lower portion of the cartridge body 1 ranges from 1.5 mm to 4 mm. Exemplarily, the maximum distance H3 between the outer edge of the spiral portion of the stirring member 3 and the inner wall of the lower portion of the cartridge body 1 is 1.5 mm, 2 mm, 2.5 mm, 3 mm, 3.5 mm or 4 mm, but is not limited thereto. When the outer edge of the spiral portion of the stirring member 3 is close to the inner wall of the lower portion of the cartridge body 1, the solid-liquid mixture remains easily on the lower portion of the cartridge body 1 for a gravitational effect. Hence, the distance between the inner wall of the cartridge body 1 and the outer edge of the spiral portion of the stirring member 3 is reduced as much as possible, such that the stirring member 3 scrapes the solid-liquid mixture on the inner wall of the lower portion of the cartridge body 1 as much as possible to prevent retention of the material. When the maximum distance between the outer edge of the spiral portion of the stirring member 3 and the inner wall of the lower portion of the cartridge body 1 is greater than 4 mm, the solid-liquid mixture on the lower portion of the cartridge body 1 cannot be stirred by the stirring member 3 completely. When the maximum distance between the outer edge of the spiral portion of the stirring member 3 and the inner wall of the lower portion of the cartridge body 1 is less than 1.5 mm, the movement of the solid-liquid mixture is affected for the excessively small distance between the stirring member 3 and the inner wall of the cartridge body 1, and the rotation of the stirring member 3 is hindered.

In some embodiments, a maximum distance H4 between an outer edge of the spiral portion of the stirring member 3 and an inner wall of each of a left side and a right side of the cartridge body 1 ranges from 1.5 mm to 6 mm. Exemplarily, the maximum distance H4 between the outer edge of the spiral portion of the stirring member 3 and the inner wall of each of the left side and the right side of the cartridge body 1 is 1.5 mm, 2 mm, 2.5 mm, 3 mm, 3.5 mm, 4 mm, 5 mm, 5.5 mm or 6 mm, but is not limited thereto. Since the solid-liquid mixture at the left side and the right side of the cartridge body 1 moves down under an action of gravity, an appropriate distance may be kept between the outer edge of the spiral portion of the stirring member 3 and the inner wall of each of the left side and the right side of the cartridge body 1 to accommodate more solid-liquid mixture. When the maximum distance between the outer edge of the spiral portion of the stirring member 3 and the inner wall of each of the left side and the right side of the cartridge body 1 is less than 1.5 mm, the movement of the solid-liquid mixture is affected for the excessively small distance between the stirring member 3 and the inner wall of the cartridge body 1, and the rotation of the stirring member 3 is hindered. When the maximum distance between the outer edge of the spiral portion of the stirring member 3 and the inner wall of each of the left side and the right side of the cartridge body 1 is greater than 6 mm, the volume is excessively large, and the solid-liquid mixture cannot be stirred by the stirring member 3 completely to cause stacking, retention and the like.

In addition, the transitional connection portion 16 protrudes upward from a surface of the cartridge body 1. The feed portion 11 is provided on the transitional connection portion 16. Since the transitional connection portion 16 protrudes upward, the position of the feed portion 11 is risen to pour the material more conveniently, and expand the material accommodating space. A feed chamber 161 is provided in the transitional connection portion 16. The feed chamber 161 communicates with the storage chamber 12. When the material is poured, the material enters the feed chamber 161 first, and then enters the storage chamber 12. A size of a longitudinal section of the feed chamber 161 is greater than a size of a longitudinal section of the storage chamber 12, such that the volume of the cartridge body 1 for accommodating the material and the solid-liquid mixture is increased.

Referring to FIG. 1, in the discharge assembly 2, the discharge assembly 2 includes a discharge hopper 21, a handle 22, and a discharge valve 23. The discharge hopper 21 is provided on the side end surface 14. The discharge port 121 can communicate with the discharge hopper 21. One end of the handle 22 includes one side hinged to the discharge hopper 21, and the other side hinged to the discharge valve 23. The handle 22 can swing relative to the discharge hopper 21. In the swinging process of the handle 22, the handle 22 can drive the discharge valve 23 to rise or fall, thereby opening or closing the discharge hopper 21.

An embodiment of the present disclosure further provides a cold beverage maker (not shown in the figure). According to the cold beverage maker provided by the embodiment of the present disclosure, the cold beverage maker includes the above feed and discharge cartridge and the stirring assembly. The feed and discharge cartridge includes the cartridge body 1 and the discharge assembly 2. The stirring assembly includes the stirring member 3. The stirring member 3 is provided in the cartridge body 1, and can be configured to stir the solid-liquid mixture formed in the cartridge body 1. The cartridge body 1 further includes the guide portion 13. The guide portion 13 inclines gradually from the upper portion of the cartridge body 1 to the discharge assembly 2. The inner wall of the guide portion 13 forms the concave surface. The smoothie or ice cream formed in the stirring process moves to the end of the cartridge body 1 close to the discharge assembly 2. Then, the smoothie or ice cream is guided by the inclined guide portion 13, such that it can flow back to the middle of the cartridge body 1. Moreover, because of the concave surface, the ice cream with smaller ice crystals flows better on the inner wall of the guide portion 13. Therefore, the present disclosure can make both the smoothie and the ice cream flow back smoothly, and can be applicable to smoothie products and ice cream products.

The above descriptions are merely preferred implementations of the present disclosure.

It should be noted that a person of ordinary skill in the art may further make several improvements and modifications without departing from the principle of the present disclosure, but such improvements and modifications should be deemed as falling within the protection scope of the present disclosure.

## Claims

1. A feed and discharge cartridge, comprising a cartridge body and a discharge assembly provided on the cartridge body, wherein a feed portion and a storage chamber are provided on the cartridge body; the feed portion communicates with the storage chamber; a discharge port is formed in a sidewall of the storage chamber; and the discharge assembly communicates with the storage chamber through the discharge port; and
the cartridge body further comprises a guide portion; the guide portion is provided at an end of the cartridge body close to the discharge assembly; the guide portion inclines gradually from an upper portion of the cartridge body to the discharge assembly; and an inner wall of the guide portion forms a concave surface.

2. The feed and discharge cartridge according to claim 1, wherein the inner wall of the guide portion is a concave continuous surface; and
the feed portion is provided at an end of the cartridge body away from the discharge assembly and located on the upper portion of the cartridge body; the feed portion comprises a feed port; and a cross section of the feed port is gradually reduced from top to bottom.

3. The feed and discharge cartridge according to claim 1, wherein a transitional connection portion is provided between an outer wall of the cartridge body and the feed portion; and the transitional connection portion extends gradually from the outer wall of the cartridge body to the feed portion.

4. The feed and discharge cartridge according to claim 3, wherein the transitional connection portion is an arc transition or an oblique transition or has a smooth surface.

5. The feed and discharge cartridge according to claim 3, wherein a width of the transitional connection portion is gradually increased from the outer wall of the cartridge body to the feed portion.

6. The feed and discharge cartridge according to claim 1, wherein at least a part of an outer contour for a cross section of the cartridge body is elliptical or approximately elliptical; the end of the cartridge body close to the discharge assembly is provided with a side end surface; the discharge assembly is provided on the side end surface; the discharge port is formed in the side end surface; an upper portion of the side end surface is connected to a lower portion of the guide portion; and a connecting line for the side end surface and the guide portion is a first connecting line.

7. The feed and discharge cartridge according to claim 6, wherein a sidewall of the cartridge body is provided with a cartridge body surface; the cartridge body surface is connected to an upper portion of the guide portion; a connecting line for the cartridge body surface and the guide portion is a second connecting line; there are two second connecting lines that incline symmetrically from a top of the cartridge body to two sides of the guide portion; ends of the two second connecting lines intersect with each other; and the other ends of the two second connecting lines respectively extend to the two sides of the guide portion, and are respectively connected to two ends of the first connecting line.

8. The feed and discharge cartridge according to claim 2, wherein the feed portion further comprises a guide plate; the guide plate is located under the feed port; and the guide plate comprises one side connected to an inner wall of the feed port, and the other side obliquely extending to the storage chamber.

9. The feed and discharge cartridge according to claim 6, wherein a stirring member is provided in the storage chamber; an end of the stirring member close to the discharge assembly is provided with an extruding end; and a minimum distance between the extruding end and the side end surface ranges from 3 mm to 10 mm.

10. The feed and discharge cartridge according to claim 9, wherein a maximum distance between an outer edge of a spiral portion of the stirring member and an inner wall of the upper portion of the cartridge body ranges from 2 mm to 38 mm.

11. The feed and discharge cartridge according to claim 9, wherein a maximum distance between an outer edge of a spiral portion of the stirring member and an inner wall of a lower portion of the cartridge body ranges from 1.5 mm to 4 mm.

12. The feed and discharge cartridge according to claim 9, wherein a maximum distance between an outer edge of a spiral portion of the stirring member and an inner wall of each of a left side and a right side of the cartridge body ranges from 1.5 mm to 6 mm.

13. The feed and discharge cartridge according to claim 3, wherein the transitional connection portion protrudes upward from a surface of the cartridge body; the feed portion is provided on the transitional connection portion; a feed chamber is provided in the transitional connection portion; the feed chamber communicates with the storage chamber; and a size of a longitudinal section of the feed chamber is greater than a size of a longitudinal section of the storage chamber.

14. The feed and discharge cartridge according to claim 6, wherein the discharge assembly comprises a discharge hopper, a handle, and a discharge valve; the discharge hopper is provided on the side end surface; the discharge port communicates with the discharge hopper; one end of the handle comprises one side hinged to the discharge hopper, and the other side hinged to the discharge valve; and the handle is capable of driving the discharge valve to rise or fall, thereby opening or closing the discharge hopper.

15. A cold beverage maker, comprising the feed and discharge cartridge according to any one of claims 1-14.
